## Europäisches Patentamt
## European Patent Office
## Office européen des brevets

(11) Veröffentlichungsnummer: **0 143 408**
**B1**

(12) **EUROPÄISCHE PATENTSCHRIFT**

(45) Veröffentlichungstag der Patentschrift:
03.08.88

(51) Int. Cl.⁴: **B 60 J 3/02**

(21) Anmeldenummer: **84113878.7**

(22) Anmeldetag: **16.11.84**

(54) **Sonnenblende für Fahrzeuge.**

(30) Priorität: **26.11.83 DE 3342897**

(43) Veröffentlichungstag der Anmeldung:
**05.06.85 Patentblatt 85/23**

(45) Bekanntmachung des Hinweises auf die Patenterteilung:
**03.08.88 Patentblatt 88/31**

(84) Benannte Vertragsstaaten:
**DE FR GB IT SE**

(56) Entgegenhaltungen:
**DE - A - 2 737 215**
**DE - A - 3 008 361**
**DE - C - 1 259 725**
**DE - U - 1 941 202**
**DE - U - 7 721 483**
**DE - U - 7 805 618**
**DE - U - 8 125 330**

(73) Patentinhaber: **Gebr. Happich GmbH,
Postfach 10 02 49 Clausenbrücke 1,
D-5600 Wuppertal 1 (DE)**

(72) Erfinder: **Dietz, Günter, Eggenbruch 97,
D-5600 Wuppertal 1 (DE)**
Erfinder: **Nowak, Manfred, Steinberg 16,
D-5650 Solingen 1 (DE)**
Erfinder: **Kaiser, Klaus-Peter, Sellscheid 42,
D-5632 Wermelskirchen (DE)**

ACTORUM AG

## Beschreibung

Die Erfindung bezieht sich auf eine Sonnenblende für Fahrzeuge mit einem als Polsterkörper ausgebildeten, in einer Hüllfolie eingebetteten und durch eine eingelagerte Verstärkungseinlage ausgesteiften Sonnenblendenkörper, der an einem Endbereich eines seiner Längsränder eine darin einendig eingelassene, anderendig von einem Schwenklager aufgenommene Lagerachse trägt und der am anderen Endbereich desselben Längsrandes einen eine Ausnehmung desselben überquerenden, zum Längsrand etwa parallelen Lagerzapfen aufweist, der lösbar in die Lageraufnahme eines Gegenlagers einrastbar ist.

In den Unterlagen des DE-U-81 25 330 ist das herstellungstechnische Problem angesprochen, die Befestigung des Lagerzapfens im Polsterkörper so zu bewirken, daß dessen Ummantelung mit der folienartigen Hülle von dem Lagerzapfen nicht behindert wird, wobei die Umhüllung in der Weise erfolgen soll, daß der Polsterkörper beidseitig jeweils mit einer Folie belegt und die beiden Folien dann entlang des Randes des Sonnenblendenkörpers, dessen Kontur folgend, in einem Arbeitsgang miteinander verschweißt werden.

In der genannten Druckschrift ist weiterhin angegeben, daß das geschilderte Problem im Stande der Technik auf zweierlei Weise gelöst wird. Die eine Problemlösung (vgl. DE-C-1 259 725) sieht vor, den Lagerzapfen mit in die folienartige Hülle einzubeziehen, d.h., auch den Lagerzapfen mit der Folie zu umkleiden. Im Gebrauch der Sonnenblende führt dies dazu, daß die Hülle im eingerasteten Zustand der Sonnenblende zwischen dem Gegenlager und dem Lagerzapfen zu liegen kommt und beim Verschwenken der Sonnenblende dort möglicherweise verzogen und zum Beispiel durch Aufplatzen einer Schweißnaht eingerissen werden kann.

Der andere bekannte Weg, das Problem zu lösen, besteht (vgl. DE-U-19 41 202) darin, den Lagerzapfen erst nach der Fertigstellung der folienartigen Hülle in einem Lagerkörper zu befestigen, wofür er durch randseitige Öffnungen in der Folie nachträglich in den Polsterkörper, und zwar in einen in diesen eingearbeiteten, seiner Form nach die Umhüllung nicht störenden Haltekörper, eingefügt und dabei mit dem Haltekörper verbunden wird. Das sich auf die gleiche Problemlösung beziehende DE-GM 81 25 330 betrifft eine Sonnenblende, die sich dadurch auszeichnen soll, daß der von Ende zu Ende gerade Lagerzapfen mit seinen Endbereichen durch Öffnungen in der Hülle hindurch jeweils in ein Steckloch in dem einen bzw. anderen Schenkel eines innerhalb der Hülle im Sonnenblendenkörper befestigten, etwa U-förmigen Haltebügels eingesteckt und in dem einen Steckloch gegen Drehen und in dem anderen gegen axiales Verschieben bezüglich des Haltebügels gesichert ist. Bei diesem bekannten Vorschlag ist es erforderlich, den Lagerzapfen zunächst in das eine axiale Verschiebbarkeit zulassende Steckloch einzuführen und erst nachdem der Lagerzapfen in dieses eingeführt worden ist, durch nunmehriges Zurückschieben des Lagerzapfens in das andere Steckloch die axiale Sicherung, ggf. unter Ausnutzung eines Schnappeffektes, vorzunehmen. Diese Ausbildung verlangt die Herstellung, Bereitstellung und Montage von Zusatzteilen, verlangt weiterhin zumindest ein erhebliches Maß an Fingerfertigkeit und erscheint insgesamt gesehen äußerst zeit- und arbeitsaufwendig zu sein, zumal der Polsterkörper verformt werden muß, um ein Einstecken des Lagerzapfens in das erste, eine axiale Verschiebbarkeit zulassende Steckloch zu ermöglichen.

Der Erfindung liegt hiernach die Aufgabe zugrunde, eine Sonnenblende der eingangs genannten Art in der Herstellung zu vereinfachen, insbesondere in bezug auf die Ausbildung und Anordnung des Lagerzapfens zu verbessern.

Diese Aufgabe wird erfindungsgemäß dadurch gelöst, daß der Lagerzapfen ganz oder teilweise aus einem unmittelbar auf einen Bereich der Umhüllung aufgespritzten Kunststoffkörper gebildet ist.

Durch diese erfindungsgemäße Maßnahme wird erreicht, daß der Lagerzapfen durch Aufspritzen auf den bis auf den Lagerzapfen vollständig fertiggestellten Sonnenblendenkörper hergestellt oder vervollständigt wird. Für die Herstellung oder Fertigstellung des Lagerzapfens wird nur eine kleine Kunststoff-Spritzgußform benötigt, in die der Sonnenblendenkörper eingelegt und in einem relativ kleinen Bereich umspritzt wird. Das Umspritzen läßt sich schnell und einfach durchführen und benötigt nicht mehr Zeit, als für die Herstellung einer separat gefertigten Kunststoff-Lagerachse erforderlich ist. Allerdings erbringt das Umspritzen den Vorteil, daß die Lagerachse nachbearbeitungsfrei am Sonnenblendenkörper unmittelbar angeformt ist und damit nicht mehr in der weiter oben geschilderten arbeitsaufwendigen Weise montiert werden muß. Durch die Erfindung wird demnach die Herstellung einer Sonnenblende vereinfacht und verbilligt und in der Qualität wesentlich verbessert.

Eine bevorzugte Ausführungsform der Erfindung besteht darin, daß der Lagerzapfen, der einstückig mit dem Sonnenblendenkörper bzw. mit der Verstärkungseinlage ausgebildet und ebenfalls in der Hüllfolie eingebettet ist, einen unmittelbar auf die Hüllfolie aufgespritzten rohrförmigen Kunststoffmantel trägt. Diese Maßnahme ist von besonderer Bedeutung, weil sie die Herstellung des Sonnenblendenkörpers in klassischer Herstellungsmanier und mit vorhandenen Werkzeugen zuläßt und nur einen zusätzlichen Arbeitsschritt, nämlich das Umspritzen des Lagerzapfens bzw. der Hüllfolie im Lagerzapfenbereich verlangt. Dieser zusätzliche Arbeitsschritt, der kostenmäßig kaum ins Gewicht fällt, bewirkt die Schaffung bzw. Vervollständigung eines Lagerzapfens, dessen Umhüllung nun nicht mehr an den Schweißnähten aufplatzen kann, und der exakt zylindrisch ausgebildet und daher im Gegenlager bei guter Abriebfestigkeit leicht drehbar ist.

In Ausgestaltung der Erfindung ist vorgesehen, daß der Kunststoffmantel eine geringere Länge als der Lagerzapfen aufweist und mit beiden Enden nicht bis an die die Ausdehnung begrenzende Stirnwandungen herangeführt ist. Hierdurch wird die Herstellung des Lagerzapfenmantels begünstigt, weil die nicht vom Mantel bedeckten Bereiche als Widerlager für die hier dicht schließenden Hälften des Spritzgußwerkzeuges benutzt werden können.

Der Lagerzapfen weist vorteilhafterweise einen aus einem inneren Kern, einer den Kern konzentrisch umgebenden Hüllfolie und einem die Hüllfolie konzentrisch umgebenden Mantel bestehenden Aufbau auf, wobei der Kern aus dem Abschnitt der Verstärkungseinlage und der Mantel aus einem auf die Hüllfolie aufgespritzten und mit dieser einen innigen Verbund eingehenden Kunststoff-Spritzgußkörper gebildet sind.

Die erfindungsgemäße Sonnenblende läßt sich weiterhin dadurch ausgestalten, daß der Lagerzapfen zumindest ein in eine den Mantel, die Hüllfolie und den Kern senkrecht durchsetzende Bohrung eingesetztes elektrisches Kontaktelement aufweist, welches mit einem im Gegenlager angeordneten Gegenkontakt und dem aus elektrisch leitendem Material bestehenden Kern kontaktiert, welch letzterer mit einem Kontakt einer im Sonnenblendenkörper eingesetzten elektrischen Lichtquelle verbunden ist. Dabei kann in Weiterbildung dieses Erfindungsgedankens ferner vorgesehen sein, daß der Kern innerhalb des Lagerzapfens eine axiale Trennstelle aufweist und daß an jedem Endstück des Kerns ein elektrisches Kontaktelement angeschlossen ist, welches über entsprechende Kontaktelemente im Gegenlager mit der Fahrzeugelektrik verbindbar ist, wobei die auch den Kern bildende Verstärkungseinlage eine zweite Trennstelle aufweist und zwei elektrische Leiter für eine im Sonnenblendenkörper eingesetzte elektrische Lichtquelle bildet. Durch die Unterbrechung der Verstärkungseinlage bzw. des Kerns im Lagerzapfenmittenbereich ergibt sich zwar in bezug auf die Verstärkungseinlage eine Schwachstelle, welche jedoch durch den auf den Lagerzapfen aufgespritzten Mantel nach Art einer Muffenverbindung überbrückt wird.

Eine weitere bevorzugte Ausführungsform der Erfindung ist dadurch gekennzeichnet, daß auf die die Ausnehmung begrenzenden Wandungen ein als Rahmen ausgebildeter Kunststoff-Spritzgußkörper aufgespritzt ist, wobei ein Rahmenschenkel als zylindrischer Lagerzapfen ausgebildet ist. Dabei ist vorteilhafterweise weiterhin vorgesehen, daß die die Ausnehmung begrenzenden Wandungen durch die mit diesen parallel verlaufend ausgerichteten Rahmenschenkel, die einen etwa U- oder halbkreisförmigen Querschnitt aufweisen, eingefaßt bzw. umgriffen sind. Diese erfindungsgemäße Ausführungsform, bei der der Lagerzapfen am bis auf diesen vollständig fertiggestellten Sonnenblendenkörper nachträglich angespritzt wird, ist insbesondere bei Sonnenblenden von Vorteil, deren Sonnenblendenkörper mit einem textilen Flächenmaterial (Gewebe, Gewirke, Gestricke od. dgl.) umhüllt ist, weil ein solches Material an den aneinandergeschweißten oder sonstwie miteinander verbundenen Rändern zum Ausfransen neigt, insbesondere dann, wenn die Trennähte in engen Radien verlaufen, wie es im Bereich der Ausnehmung im Sonnenblendenkörper der Fall ist. Durch das Umspritzen der gesamten, die Ausnehmung begrenzenden Wandungen wird aber nun neben der vorteilhaften Bildung des Lagerzapfens gleichzeitig auch die Möglichkeit eines Ausfransens des Bezugsmaterials mit Sicherheit verhindert.

Die Erfindung hat deshalb nicht nahegelegen, weil ihr Bedenken entgegenstanden, und zwar insofern, als befürchtet werden mußte, daß das den Sonnenblendenkörper umgebende Umhüllungsmaterial durch das Aufspritzen eines Kunststoffkörpers wegen der relativ hohen Spritztemperatur beschädigt werden könnte. Es hat sich aber in überraschender Weise gezeigt, daß ein aus Kunststoffolien bestehendes Umhüllungsmaterial nicht beschädigt wird, sondern im Umspritzungsbereich nur leicht anschmilzt, mit dem Vorteil, daß sich zwischen dem Umhüllungsmaterial und dem Kunststoffspritzgußteil ein inniger Verbund einstellt. Aber auch bei einem textilen Umhüllungsmaterial kommt es nicht, wie erwartet werden konnte, zu einem Ansenken des Materials, sondern auch hier zu einem innigen Verbund, weil das Kunststoffmaterial beim Spritzvorgang in die Maschen des Textilmaterials eindringt und sich in diesen verankert.

Ausführungsbeispiele der Erfindung werden im folgenden anhand der Zeichnungen näher erläutert. Es zeigen

Fig. 1 ein erstes Ausführungsbeispiel der Sonnenblende in einer Gesamtansicht,

Fig. 2 im vergrößerten Maßstab einen Schnitt II–II nach Fig. 1,

Fig. 3 ein zweites Ausführungsbeispiel der Sonnenblende in einer Gesamtansicht,

Fig. 4 im vergrößerten Maßstab einen Schnitt IV–IV nach Fig. 3,

Fig. 5 den gleichen Schnitt in einer gegenüber Fig. 4 abgewandelten Ausführungsform,

Fig. 6 ein drittes Ausführungsbeispiel in einer Gesamtansicht und

Fig. 7 im vergrößerten Maßstab einen Schnitt VII–VII nach Fig. 6.

Die in den Zeichnungen dargestellte Sonnenblende weist einen als Polsterkörper ausgebildeten Sonnenblendenkörper 1 mit angenähert rechteckiger Umrißkontur und plattenförmiger Gestalt auf. Der Sonnenblendenkörper 1 besitzt eine obere Längskante 2, eine untere Längskante 3 sowie Stirnkanten 4 und 5. Nahe und etwa parallel zu den Kanten 2 bis 5 verlaufend ist in dem Sonnenblendenkörper 1 eine aus einem Drahtrahmen bestehende Verstärkungseinlage 6 eingelagert.

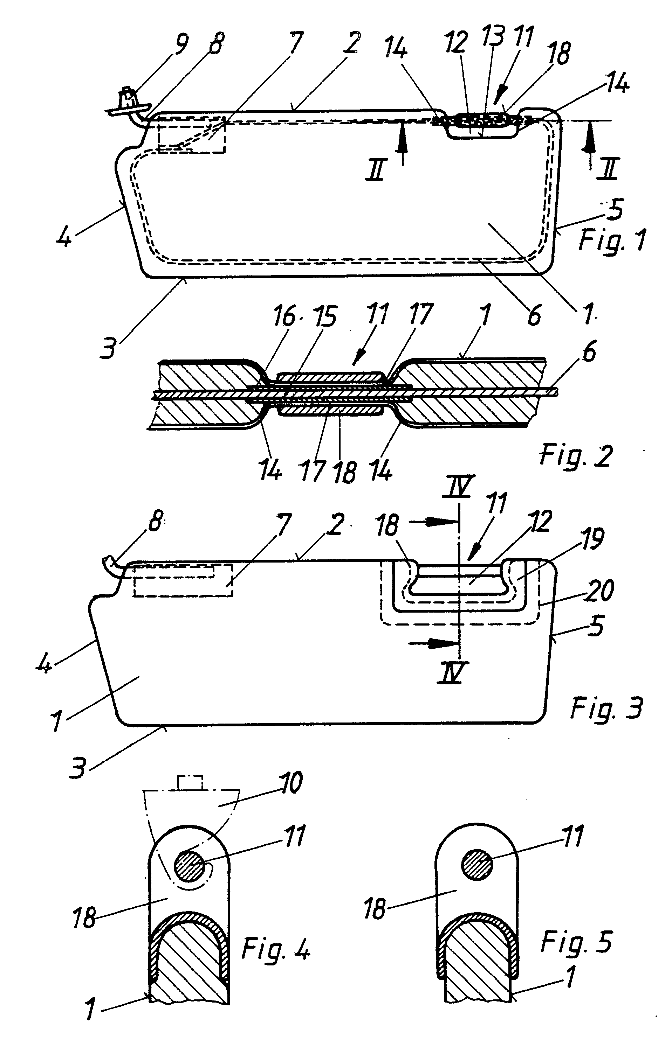

Im Bereich der oberen Längskante 2 weist der Sonnenblendenkörper 1, und zwar zeichnungslinksseitig der Fig. 1, 3 und 6, ein eingelagertes und an der Verstärkungseinlage 6 festgelegtes Lagergehäuse 7 auf, in dem ein Schenkel einer etwa L-förmigen Lagerachse 8 gelagert ist, dessen anderer Schenkel in einem an einer Fahrzeugkarosserie zu befestigenden Schwenklager 9 sitzt. Zeichnungsrechtsseitig von Fig. 1, 3 und 6 ist ebenfalls im Bereich der oberen Längskante 2 ein sogenanntes Gegenlager angeordnet, welches aus einem an der Fahrzeugkarosserie zu befestigenden Gegenlagergehäuse 10 (welches in Fig. 4 strichpunktiert angedeutet ist) und einem in dessen Lageraufnahme lösbar einrastbaren Lagerzapfen 11 besteht. Die Anordnung des Lagerzapfens 11 ist so getroffen, daß er mit dem im Lagergehäuse 7 befindlichen Schenkel der Lagerachse 8 fluchtet und mit diesem eine gemeinsame Drehachse bildet.

Der Lagerzapfen 11 überquert eine gegenüber der oberen Längskante 2 zurückspringende Ausnehmung 12 des Sonnenblendenkörpers 1, wobei die Ausnehmung 12 eine Bodenwandung 13 und zwei Stirnwandungen 14 aufweist.

Beim Ausführungsbeispiel nach Fig. 1 und 2 weist der Lagerzapfen 11 folgenden Aufbau auf: Er besteht aus einem inneren Kern 15, der aus einem Teilbereich der Verstärkungseinlage 6 gebildet ist, einer den Kern 15 konzentrisch umschließenden Hülse 16 aus verschweißbarem Kunststoffmaterial, einer die Hülle konzentrisch umschließenden Hüllfolie 17, die aus zwei mit ihren Rändern aneinandergeschweißten Folienzuschnitten gebildet ist und aus einem die Hüllfolie 17 konzentrisch umschließenden Kunststoffspritzgußkörper 18, der als rohrförmiger Mantel ausgebildet ist. Der Kunststoffkörper 18 wird als nachgeschalteter Arbeitsgang durch Umspritzen der Hüllfolie 17 im Lagerzapfenbereich gefertigt. Wie die Zeichnungen zeigen, erstreckt sich der Kunststoffkörper 18 nicht bis unmittelbar an die Stirnwandungen 14 der Ausnehmung 12, sondern endet kurz vor diesen, so daß hier die Formhälften der Spritzgußform ein Widerlager finden und ein Austritt von Kuststoffmasse verhindert wird.

Das in den Fig. 3 bis 5 gezeigte Ausführungsbeispiel entspricht im Grundaufbau dem nach Fig. 1 und 2. Es wird jedoch hier bei der Fertigstellung des Sonnenblendenkörpers 1 zunächst auf die Anordnung des Lagerzapfens 11 verzichtet. Der Lagerzapfen 11 wird bei diesem Ausführungsbeispiel nachträglich, also nachdem der Polsterkörper mit randseitig umlaufend verschweißten Hüllfolien 17 umkleidet worden ist, gebildet, und zwar durch unmittelbares Umspritzen der Hüllfolie 17 im Gegenlagerbereich. Zweckmäßigerweise besteht der Lagerzapfen 11 aus einem Schenkel eines als etwa rechteckiger Rahmen 19 ausgebildeten Kunststoff-Spritzgußkörpers 18. Die übrigen Rahmenschenkel fassen die Bodenwandung 13 und die Stirnwandungen 14 der Ausnehmung 12 ein, wie dies in den Fig. 4 und 5 gezeigt ist. In Fig. 4 sind die die Ausnehmung 12 begrenzenden Wandungen 13, 14 eingeschnürt ausgebildet und die eingeschnürten bzw. in der Dicke geschmälerten Bereiche sind vom Kunststoffkörper 18 ausgefüllt, so daß der Kunststoffkörper 18 die beiden Hauptflächen des Sonnenblendenkörpers 1 nicht überragt. Anders ist es beim Ausführungsbeispiel nach Fig. 5, bei dem der den Rahmen 19 mit dem zylindrischen Lagerzapfen 11 bildende Kunststoff-Spritzgußkörper 18 geringfügig aufträgt. Die Rahmenschenkel des Kunststoff-Spritzgußkörpers 18 sind mit Ausnahme des den Lagerzapfen 11 bildenden Schenkels mit einem U- oder halbkreisförmigen, die Wandungen 13, 14 umgreifenden Querschnittsprofil ausgebildet. Um den Rahmen 19 mit sauberen Randkanten ausbilden zu können, ist zweckmäßigerweise im Sonnenblendenkörper 1 ein lediglich strichpunktiert dargestelltes Widerlager 20 angeordnet, welches den Schließdruck der Spritzgußformhälften aufzunehmen vermag.

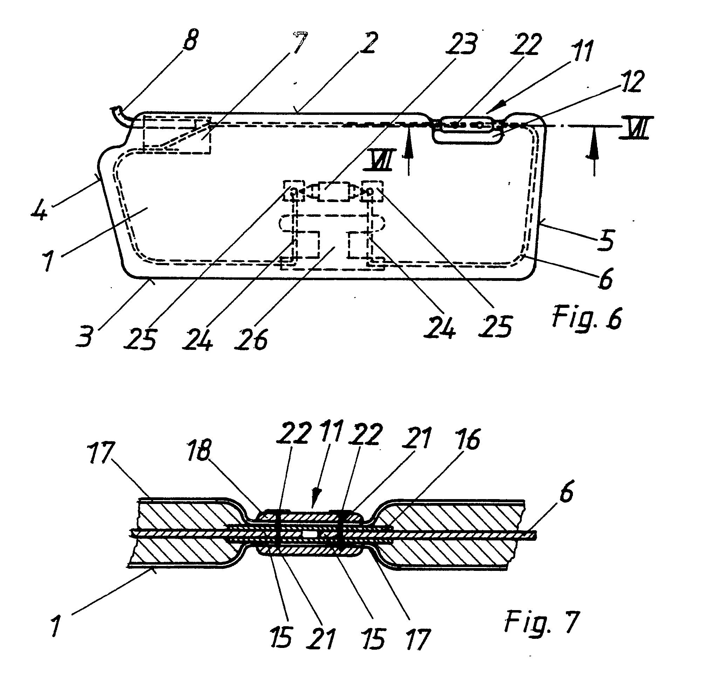

Auch das Ausführungsbeispiel nach Fig. 6 und 7 entspricht weitgehend dem nach Fig. 1 und 2; es ist jedoch gegenüber diesem vervollkommnet. Dabei ist im einzelnen vorgesehen, den Kern 15 etwa mittig des Lagerzapfens 11 zu unterbrechen und die Endbereiche auf Abstand zu halten, was durch ein dazwischengesetztes, elektrisch nichtleitendes Distanzstück (nicht gezeigt) oder dadurch bewerkstelligt werden kann, daß die auch hier vorgesehene Hülse 16 durch Umspritzen der Verstärkungseinlage 6 im Gegenlagerbereich mit Kunststoffmaterial gebildet wird. Senkrecht zur Achse des Lagerzapfens 11 ist dieser mit zwei Bohrungen versehen, die den Mantel bzw. den Kunststoffkörper 18, die Hüllfolie 17, die Hülse 16 und jeweils ein Endstück des Kerns 15 durchsetzen und die jeweils zur Aufnahme des Steckzapfens 21 eines elektrischen Kontaktelements 22 bestimmt sind. Die Kontaktelemente 22 kontaktieren vorzugsweise nur in der Gebrauchslage der Sonnenblende mit im Gegenlagergehäuse 10 angeordneten, nicht dargestellten Gegenkontakten, welch letztere mit der Fahrzeugelektrik verbindbar sind. Der Sinn dieser Maßnahme ist der, eine im Sonnenblendenkörper 1 eingesetzte und durch ein nicht dargestelltes Lampenglas abgeschirmte elektrische Lichtquelle 23 mit elektrischem Strom zu versorgen. Beim Ausführungsbeispiel nach Fig. 6 und 7 wird hierzu die Verstärkungseinlage 6 mit herangezogen, indem sie neben ihrer Aufgabe, den Sonnenblendenkörper 1 auszusteifen, gleichzeitig die Funktion von elektrischen Leitern übernimmt. Wie Fig. 6 zeigt, weist die Verstärkungseinlage 6 im Bereich der unteren Längskante 3 zwei nach oben, also zur oberen Längskante 2 hin ausgerichtete Abwinkelungen 24 auf, an deren freien Enden jeweils eine Soffitte 25 angeklemmt oder angelötet ist. Zwischen den Soffitten 25 sitzt die im Ausführungsbeispiel als Soffittenbirne ausgebildete Lichtquelle 23. Die Verstärkungseinlage 6 besteht hier also aus zwei voneinander getrennten Teilen, von denen das eine das erste Kontaktelement 22 mit der ersten Soffitte 25 und das andere das zweite Kontaktelement 22 mit der zweiten Soffitte 25 elektrisch leitend verbindet. Um die Stabilität der Verstärkungseinlage 6 sicherzustellen, sind die beiden Teile einerseits durch den mit einem Mantel umspritzten Lagerzapfen 11 und andererseits durch einen Kunststoffbrücke 26 im Bereich der unteren Längskante 3 aneinander festgelegt.

Es ist auch möglich, im Lagerzapfen 11 nur einen elektrischen Kontakt 22 anzuordnen, der über die Verstärkungseinlage 6 zu einer Soffitte 25 eine elektrisch leitende Verbindung herstellt. An die zweite Soffitte 25 wird in diesem Fall ein elektrischer Leiter angeschlossen, der zum Beispiel durch die Lagerachse 8 geführt ist.

## Patentansprüche

1. Sonnenblende für Fahrzeuge mit einem als Polsterkörper ausgebildeten, in einer Hüllfolie (17) eingebetteten und durch eine eingelagerte Verstärkungseinlage (6) ausgesteiften Sonnenblendenkörper (1), der an einem Endbereich eines seiner Längsränder (2) eine darin einendig eingelassene, anderendig von einem Schwenklager (9) aufgenommene Lagerachse (8) trägt und der am anderen Endbereich desselben Längsrandes (2) einen eine Ausnehmung (12) desselben überquerenden, zum Längsrand (2) etwa parallelen Lagerzapfen (11) aufweist, der lösbar in die Lageraufnahme eines Gegenlagers (20) einrastbar ist, dadurch gekennzeichnet, daß der Lagerzapfen (11) ganz oder teilweise aus einem unmittelbar auf einen Bereich der Umhüllung (17) aufgespritzten Kunststoffkörper (18) gebildet ist.

2. Sonnenblende nach Anspruch 1, dadurch gekennzeichnet, daß der Lagerzapfen (11), der einstückig mit dem Sonnenblendenkörper (1) bzw. mit der Verstärkungseinlage (6) ausgebildet und ebenfalls in der Hüllfolie (17) eingebettet ist, einen unmittelbar auf die Hüllfolie (17) aufgespritzten rohrförmigen Kunststoffmantel (18) trägt.

3. Sonnenblende nach Anspruch 2, dadurch gekennzeichnet, daß der Kunststoffmantel (18) eine geringere Länge als der Lagerzapfen (11) aufweist und mit beiden Enden nicht bis an die die Ausnehmung (12) begrenzenden Stirnwandungen (14) herangeführt ist.

4. Sonnenblende nach Anspruch 2 oder 3, dadurch gekennzeichnet, daß der Lagerzapfen (11) einen aus einem inneren Kern (15), einer den Kern (15) konzentrisch umgebenden Hüllfolie (17) und einem die Hüllfolie (17) konzentrisch umgebenden Mantel bestehenden Aufbau aufweist, wobei der Kern (15) aus dem Abschnitt der Verstärkungseinlage (6) und der Mantel aus einem auf die Hüllfolie (17) aufgespritzten und mit dieser einen innigen Verbund eingehenden Kunststoff-Spritzgußkörper (18) gebildet sind.

5. Sonnenblende nach einem oder mehreren der Ansprüche 2 bis 4, dadurch gekennzeichnet, daß der Lagerzapfen (11) zumindest ein in eine den Mantel (18), die Hüllfolie (17) und den Kern (15) senkrecht durchsetzende Bohrung eingesetztes elektrisches Kontaktelement (22) aufweist, welches mit einem im Gegenlager (10) angeordneten Gegenkontakt und dem aus elektrisch leitendem Material bestehenden Kern (15) kontaktiert, welch letzterer mit einem Kontakt (25) einer im Sonnenblendenkörper eingesetzten elektrischen Lichtquelle (23) verbunden ist.

6. Sonnenblende nach einem oder mehreren der Ansprüche 2 bis 5, dadurch gekennzeichnet, daß der Kern (15) innerhalb des Lagerzapfens (11) eine axiale Trennstelle aufweist und daß an jedem Endstück des Kerns (15) ein elektrisches Kontaktelement (22) angeschlossen ist, welches über entsprechende Kontaktelemente im Gegenlager (10) mit der Fahrzeugelektrik verbindbar sind, wobei die auch den Kern (15) bildende Verstärkungseinlage (6) eine zweite Trennstelle aufweist und zwei elektrische Leiter für eine im Sonnenblendenkörper (1) eingesetzte elektrische Lichtquelle (23) bildet.

7. Sonnenblende nach Anspruch 1, dadurch gekennzeichnet, daß auf die die Ausnehmung (12) begrenzenden Wandungen ein als Rahmen (19) ausgebildeter Kunststoff-Spritzgußkörper (18) aufgespritzt ist, wobei ein Rahmenschenkel als zylindrischer Lagerzapfen (11) ausgebildet ist.

8. Sonnenblende nach Anspruch 7, dadurch gekennzeichnet, daß die die Ausnehmung (12) begrenzenden Wandungen (13, 14) durch die mit diesen parallel verlaufend ausgerichteten Rahmenschenkel, die einen etwa U- oder halbkreisförmigen Querschnitt aufweisen, eingefaßt bzw. umgriffen sind.

## Claims

1. A sun visor for vehicles comprising a body (1) in the form of a pad embedded in a foil sheath (17) and strengthened by a reinforcing insert (6) and, at one end region of one of its longitudinal edges (2) bearing a pivot shaft (8) inserted therein and received at the other end in a pivot bearing (9), whereas at the other end region of the same longitudinal edge (2) the body (1) has a counter-support pin (11) substantially parallel to the longitudinal edge (2) and bridging a recess (12) therein and releasably engagable in a recess in a counter-support bracket (10) characterised in that the counter-support pin (11) is completely or partly in the form of a plastics body (18) directly injection-moulded on to a region of the sheath (17).

2. A sun visor according to claim 1, characterised in that the counter-support pin (11), which is formed integrally with the sun visor body (1) or with the reinforcing insert (6) and is likewise embedded in the foil sheath (17), bears a tubular plastics casing (18) directly injection-moulded on to the sheath (17).

3. A sun visor according to claim 2, characterised in that the plastics casing (18) is shorter than the counter-support pin (11) and its two ends do not extend as far as the end walls (14) bounding the recess (12).

4. A sun visor according to claim 2 or 3, characterised in that the counter-support pin (11) has a structure comprising an inner core (15), a foil sheath (17) concentrically surrounding the core (15), and a casing concentrically surrounding the foil sheath (17), the core (15) comprising the portion of the reinforcing insert (6) and the casing being in the form of a plastics member (18) injection-moulded on the sheath (17) and intimately bonded thereto.

5. A sun visor according to one or more of claims 2 to 4, characterised in that the counter-support pin (11) comprises at least one electric contact element (22) inserted into a bore extending vertically through the casing (18), the sheath (17) and the core (15) and making contact with a cooperating contact disposed in the counter-support bracket (10) and with the core (15), which is made of electrically conductive material, the core being connected to a contact (25) of an electric light source (23) inserted in the sun visor body.

6. A sun visor according to one or more of claims 2 to 5, characterised in that the core (15) has an axial disconnecting point inside the counter-support pin (11) and an electric contact element (22) is connected to each end portion of the core (15) and can be connected to the vehicle electric system via corresponding contact elements in the counter-support bracket (10), the reinforcing insert (6), which also forms the core (15), featuring a second disconnecting point and forming two electric conductors for an electric light source (23) inserted in the sun visor body (1).

7. A sun visor according to claim 1, characterised in that a plastics member (18) in the form of a frame (19) is injection-moulded on to the walls bounding the recess (12), one arm of the frame being in the form of a cylindrical counter-support pin (11).

8. A sun visor according to claim 7, characterised in that the walls (13, 14) bounding the recess (12) are surrounded or enclosed by the arms of the frame, which are aligned parallel to the walls and have a substantially U or semicircular cross-section.

## Revendications

1. Pare-soleil pour véhicules, comportant un corps de pare-soleil (1) réalisé sous forme de corps rembourré inséré dans une feuille d'enveloppe (17) et rigidifié par une armature de renforcement (6) qui y est noyée, lequel corps porte sur une zone terminale d'un de ses bords longitudinaux (2) un axe de pivotement (8) dont une extrémité est encastrée et dont l'autre extrémité est montée dans un palier de pivotement (9), et comporte à l'autre zone terminale du même bord longitudinal un tourillon s'étendant en travers d'un évidement (12) de ce bord et parallèle au bord longitudinal (2) lequel tourillon peut être encliqueté de façon amovible dans le logement d'un contre-palier (10), caractérisé en ce que le tourillon (11) est formé en totalité ou en partie par un corps en matière plastique (18) moulé directement sur une zone de l'enveloppe (17).

2. Pare-soleil selon la revendication 1, caractérisé en ce que le tourillon (11), qui est réalisé d'une seule pièce avec le corps de pare-soleil (1) ou avec l'armature de renforcement (6) et est également encastré dans la feuille d'enveloppe (17), porte une gaîne tubulaire (18) en matière plastique moulée directement sur la feuille d'enveloppe (17).

3. Pare-soleil selon la revendication 2, caractérisé en ce que la gaîne en matière plastique (18) est légèrement moins longue que le tourillon (11) et ses deux extrémités ne vont pas jusqu'aux parois frontales (14) délimitant l'évidement (12).

4. Pare-soleil selon la revendication 2 ou 3, caractérisé en ce que le tourillon (11) comporte une structure constituée par un noyau intérieur (15), une feuille d'enveloppe (17) entourant concentriquement le noyau (15) et une gaîne entourant concentriquement la feuille d'enveloppe (17) le noyau (15) étant constitué par une portion de l'armature de renforcement (6) et la gaîne par un corps en matière pastique (18) moulé sur la feuille d'enveloppe (17) en établissant avec celle-ci une liaison intime.

5. Pare-soleil selon l'une ou plusieurs des revendications 2 à 4, caractérisé en ce que le tourillon (11) comporte au moins un élément de contact (22) électrique placé dans un alésage traversant perpendiculairement la gaîne (18), la feuille d'enveloppe (17) et le noyau (15), lequel élément de contact coopère avec un contact opposé situé dans le contre-palier (10) et avec le noyau (15) constitué par un matériau électriquement conducteur, ce dernier étant relié à un contact (25) d'une source de lumière (23) placée dans le corps de pare-soleil.

6. Pare-soleil selon l'une ou plusieurs des revendications 2 à 5, caractérisé en ce que le noyau (15) à l'intérieur du tourillon de positionnement (11) comporte un emplacement de séparation axial, et en ce qu'à chaque extrémité du noyau (15) est raccordé un élément de contact électrique (22), ces éléments de contact pouvant être reliés par des éléments de contact appropriés dans le contre-palier (10) avec l'installation électrique du véhicule, l'armature de renforcement (6) constituant également le noyau (15) comportant un second emplacement de séparation et constituant deux conducteurs électriques pour une source de lumière électrique (23) placée dans le corps de pare-soleil (1).

7. Pare-soleil selon la revendication 1, caractérisé en ce qu'on injecte sur les parois délimitant l'évidement (12) un corps de matière plastique (18) moulé par injection, réalisé sous forme de cadre (19), une branche du cadre étant réalisée sous forme de tourillon cylindrique (11).

8. Pare-soleil selon la revendication 7, caractérisé en ce que les parois (13, 14) délimitant l'évidement (12) sont entourées ou enserrées par les branches du cadre orientées parallèlement à elles et présentant une section transversale sensiblement un U ou semicirculaire.

Fig. 1

Fig. 2

Fig. 3

Fig. 4

Fig. 5

0 143 408

Fig. 6

Fig. 7